# EUROPÄISCHE PATENTSCHRIFT

(11) **EP 2 015 055 B1**
(45) Veröffentlichungstag und Bekanntmachung des Hinweises auf die Patenterteilung: **24.06.2015**
(21) Anmeldenummer: 08012374.8
(22) Anmeldetag: 09.07.2008
(51) Int. Cl.: G01N 25/00, G01M 99/00

(54) **Verfahren und Vorrichtung zur Durchführung einer Brennprüfung an einem Prüfling**
Method and device for carrying out a burning test on a testpiece
Procédé et dispositif destinés à la réalisation d'un contrôle de combustion sur un échantillon

(30) Priorität: 13.07.2007 DE 102007032665
(43) Veröffentlichungstag der Anmeldung: 14.01.2009
(73) Patentinhaber: Underwriters Laboratories Inc, Northbrook, IL 60062-2096 (US)
(72) Erfinder: Behrendt, Martin, 40668 Meerbusch (DE); Sarabi, Bahman, Dr., 47800 Krefeld (DE); Teering, Wilfried, 57539 Breitscheidt (DE)
(74) Vertreter: Seemann, Ralph

(56) Entgegenhaltungen:
- EP-A- 1 347 294
- DE-B- 1 132 361
- GB-A- 1 356 023
- US-A- 2 636 388
- US-A- 3 930 397

## Beschreibung

Die Erfindung betrifft ein Verfahren und eine Vorrichtung zur Durchführung einer Brennprüfung an einem Prüfling.

Werkstoffe sind Arbeitsmittel rein stofflicher Natur, die in Produktionsprozessen als Arbeitsgegenstände weiter verarbeitet werden und in die jeweiligen Endprodukte eingehen. In der Regel handelt es sich dabei um Festkörper, wie etwa Metalle oder Kunststoffe. Bevor die aus entsprechenden Werkstoffen hergestellten Endprodukte vom Hersteller abgesetzt werden können, müssen die Endprodukte eine Vielzahl von Tests durchlaufen, um mögliche vom Produkt ausgehenden Gefahren für einen Produktbenutzer auszuschließen und dementsprechend auch das Haftungsrisiko des Herstellers zu minimieren. Daher werden Endprodukte beispielsweise einer Brandprüfung unterzogen, um das Endprodukt hinsichtlich der Brandgefahr beurteilen zu können.

Ferner werden die für die Herstellung der Endprodukte verwendeten Werkstoffe einer so genannten Vorauswahlprüfung unterzogen. Bei der Vorauswahlprüfung wird nicht das Gesamtprodukt an sich auf Brandgefahr untersucht, sondern die einzelnen Werkstoffe, die für ein Endprodukt verwendet werden, werden hinsichtlich ihrer Brenneigenschaften untersucht. Vorauswahlprüfungen an Werkstoffen werden üblicherweise an Prüflingen, die aus dem zu prüfenden Werkstoff bestehen, und eine genormte, einfache Form, wie z. B. rechteckig stabförmig, besitzen, vorgenommen.

Beispielsweise legt die Europäische Norm EN 60695-11-10 ein Prüfverfahren zu Beurteilung der Brandgefahr von Werkstoffen fest. Nach einer Verfahrensvariante des Prüfverfahrens, der so genannten Vertikal-Brennprüfung, wird ein Brenner im Abstand von 10 Millimetern unter einen stabförmigen Prüfling, der hinsichtlich seiner Längsachse vertikal aufgehängt ist, jeweils zweimal für 10 Sekunden gehalten. Die Flamme ist dabei auf 50 Watt Nennwert eingestellt. Jeweils nach Beendigung der Beflammung des Prüflings wird die so genannte Nachbrenndauer des Prüflings ermittelt, der dann anhand der ermittelten Nachbrenndauern in verschiedene Kategorien, die in dem oben genannten Standard näher spezifiziert sind, kategorisiert wird.

Verfahren zur Brandprüfung, wie z.B. zur Durchführung des in der oben genannten Europäischen Norm beschriebenen Verfahrens, werden nach dem Stand der Technik von Bedienpersonen durchgeführt, die einen Brenner für die in dem Standard angegebenen Zeiten und in den in dem jeweiligen Standard festgelegten Abständen zum Prüfkörper für die Beflammung halten. Es ist jedoch klar, dass ein von Personen durchgeführtes Prüfverfahren auch subjektiven, personenbedingten Einflüssen unterliegt. So wird beispielsweise der Abstand zwischen Brenner und Flamme nur in etwa dem Abstand entsprechen, der in der Norm vorgegeben ist.

GB-A-1 356 023 offenbart ein Verfahren und eine Vorrichtung zur Durchführung einer Brennprüfung an einem Prüfling.

DE 11 32 361 B1 offenbart ein Gerät zur Prüfung der Brennbarkeit von Materialien.

In US-A-2 636 388 ist eine Vorrichtung zur Brennprüfung eines flächigen Materials angegeben.

US-A-3 930 397 zeigt einen automatischen Brenntester, bei dem ein Brenner von einer ersten Position in eine zweite Position verschwenkbar ist.

EP-A-1 347 294 offenbart einen Brandtestautomaten mit einer Anzahl von parallel betreibbaren Brennkammern und mit Fördermitteln zur Zuführung von Proben eines zu prüfenden Probensatzes zu den Brennkammern während des Ablaufs eines Brandtests.

Aufgabe der Erfindung ist es daher, ein verbessertes Verfahren zur Durchführung einer Brennprüfung an einem Werkstoffprüfling anzugeben. Aufgabe der Erfindung ist es ferner, eine verbesserte Vorrichtung zur Durchführung einer Brennprüfung an einem Werkstoffprüfling anzugeben.

Die der Erfindung zugrunde liegenden Aufgaben werden mit den Merkmalen der unabhängigen Patentansprüche gelöst. Bevorzugte Ausführungsformen der Erfindung sind in den abhängigen Patentansprüchen angegeben.

Die Aufgabe wird gelöst durch ein Verfahren zur Durchführung einer Brennprüfung an einem Werkstoffprüfling, das den Schritt der Bilddatenerfassung des Prüflings mit mindestens einer ersten Kamera umfasst, wobei eine Bildverarbeitung der mit der mindestens einen ersten Kamera aufgenommenen Bilddaten erfolgt, wobei ein Referenzpunkt des Prüflings ermittelt wird und wobei in einem weiteren Verfahrensschritt der Brenner in einem vorgegebenen ersten Abstand zum Referenzpunkt zur Beflammung des Prüflings vollautomatisch positioniert wird.

Der Prüfling wird mit mindestens einer ersten Kamera optisch erfasst. Die dabei gewonnenen Bilddaten werden in der Bildverarbeitung verarbeitet, wobei über ein Abbild des Prüflings der Referenzpunkt ermittelt wird. Bei dem Referenzpunkt handelt es sich um einen "gedachten" Punkt im Prüfling, der über die Bildverarbeitung ermittelt wird. Der Brenner wird vollautomatisch im ersten Abstand zum Referenzpunkt positioniert. Das erfindungsgemäße Verfahren hat den Vorteil, dass somit der Abstand zwischen Brenner und Referenzpunkt innerhalb eines gewissen Toleranzbereiches immer dem ersten Abstand entspricht. Damit kann für alle Werkstoffprüflinge, die der Brennprüfung unterzogen werden, im Wesentlichen derselbe erste Abstand realisiert werden. Der erste Abstand wird dabei bevorzugterweise relativ zur Brennerspitze gemessen.

Nach einer ersten Variante der Erfindung weist die mindestens eine erste Kamera ferner einen Interferenz-Bandpassfilter zur Unterdrückung der Detektion der Brennerflamme auf. Bei der Aufnahme des Werkstoffes gilt es insbesondere, störende Einflüsse der Brennerflamme zu vermeiden, damit mittels der Bildverarbeitung die Umrisse des Prüflings sauber ermittelbar sind. Dies lässt sich nach dieser Verfahrensvariante damit realisieren, dass ein Interferenz-Bandpassfilter mit einer geringen Transmittivität für das Licht der Brennerflamme vor der mindestens einen ersten Kamera angeordnet wird.

Nach einer Ausführungsform der Erfindung handelt es sich bei der mindestens einen ersten Kamera um eine Schwarz-Weiß-Kamera, bevorzugterweise um eine CMOS-Hochgeschwindigkeitskamera. Dadurch kann beispielsweise in Kombination mit dem Interferenz-Bandpassfilter die Detektion der Brennerflamme unterdrückt werden.

Nach einer zweiten Variante der Erfindung wird die mindestens eine erste Kamera von einem Rotlichtstrahler zur Unterdrückung der Detektion der Brennerflamme bestrahlt, wobei der Rotlichtstrahler ferner den Prüfling ausleuchtet. Der Rotlichtstrahler überstrahlt die Brennerflamme, so dass die Kamera im Wesentlichen den Schattenwurf des Rotlichtstrahlers aufnimmt, wobei der Schattenwurf den Umrissen des Prüfling entspricht.

Nach einer Ausführungsform der Erfindung weist die mindestens eine erste Kamera ferner einen Polarisationsfilter auf. Ferner wird das Licht von dem Rotlichtstrahler oder den Rotlichtstrahlern linear polarisiert und der Polarisationsfilter der ersten Kamera wird so ausgerichtet, dass er eine geringe Filterwirkung für das linear polarisierte Licht aufweist. Der Rotlichtstrahler oder die Rotlichtstrahler überstrahlen zum einen die Rotlichtflamme und zum anderen wird die Detektion der Flamme durch die Kamera unterdrückt, indem über den linear polarisierten Filter sichergestellt wird, dass als Hintergrundbeleuchtung im Wesentlichen nur das Licht der Rotlichtstrahler detektiert wird, da das von der Brennerflamme emittierte Licht keine lineare Polarisation aufweist.

Nach einer Ausführungsform der Erfindung erfolgt ferner die Bildverarbeitung der mit mindestens einer zweiten Kamera aufgenommenen Bilddaten der Brennerflamme, wobei mittels der Bilddaten die Farbe der Brennerflamme ermittelt wird. Die Farbe der Brennerflamme wird dann mit der Farbe einer Sollflamme verglichen, wobei der Brenner ausgetauscht wird, falls die Farbe der Brennerflamme im Wesentlichen nicht der Farbe der Soll-Flamme entspricht.

Nach einer Ausführungsform der Erfindung erfolgt ferner die Bildverarbeitung der mit mindestens einer zweiten Kamera aufgenommenen Bilddaten der Brennerflamme. Bei der zweiten Kamera handelt es sich vorzugsweise um eine Farbkamera. Die Überprüfung der Flamme erfolgt durch Ermittlung der Farbwerte der Flamme gemäß dem rgb-Farbmodell und Vergleich mit vorgegebenen Farbwerten nach dem rgb-Farbmodell einer Soll-Flamme. Nach dem rgb-Farbmodell wird eine Farbe über drei Farbwerte spezifiziert. Der erste Farbwert gibt den Anteil von rot, der zweite Farbwert gibt den Anteil von grün und der dritte Farbwert gibt den Anteil von blau in der Farbe wieder. Die Anteile werden typischerweise in Prozent spezifiziert. Ferner wird der Brenner ausgetauscht, falls anhand der Bildverarbeitung detektiert wird, dass die Farbwerte der Flamme nicht den Farbwerten der Soll-Flamme entsprechen. Durch Vergleich der anhand der Bilddaten der Brennerflamme ermittelten rgb-Farbe mit der rgb-Farbe der Sollflamme, beispielsweise immer vor einer Beflammung des Prüflings, wird sichergestellt, dass der Prüfling mit der, der Brennprüfung zugrunde liegenden und genormten Prüfflamme beflammt wird. Nach einer Ausführungsform der Erfindung erfolgt eine Umpositionierung des Prüflings aus einem Probenmagazin in eine Position, in der der Prüfling von der mindestens einen ersten Kamera optisch erfassbar ist und vom Brenner beflammbar ist, wobei das Probenmagazin für die Aufnahme von einer Vielzahl von Prüflingen vorgesehen ist. Das Probenmagazin kann so ausgestaltet sein, dass es beispielsweise einen Heißluftofen und eine Trockenkammer aufweist, um eine Lagerung der Proben nach den in der Brennprüfungsnorm vorgegebenen Temperaturen und Luftfeuchtigkeiten zu realisieren.

Nach einer Ausführungsform der Erfindung erfolgt die Bildverarbeitung der mit mindestens einer dritten Kamera aufgenommenen Bilddaten des Prüflings. Ferner wird anhand der mit der mindestens einen dritten Kamera aufgenommenen Bilddaten ermittelt, ob der Prüfling brennt. Für die Klassifizierung des Werkstoffes, aus dem der Prüfling besteht, in eine Kategorie gemäß der der Prüfung zugrunde liegenden Norm, kann es unter Umständen notwendig sein, zu ermitteln, ob a) der Prüfling brennt und b) wie lange der Prüfling brennt. Verfahrensgemäß kann dies durch Aufnahme des Prüflings mit einer dritten Kamera, die bevorzugterweise eine Farbbildkamera ist, realisiert werden. Durch die Bildverarbeitung der so gewonnenen Bilddaten kann dann beispielsweise die Brennzeit des Prüflings ermittelt werden.

Nach einer Ausführungsform der Erfindung erfolgt ferner die Ermittlung anhand der mit der mindestens einen dritten Kamera aufgenommenen Bilddaten, ob der Prüfling glüht. Die Abbildung eines brennenden Prüflings wird wesentlich heller sein als die eines glühenden Prüflings. Diese ist wiederum heller als die eines nicht glühenden und nicht brennenden Prüflings. Für die Bildverarbeitung können Schwellwerte vorgegeben sein, um einen brennenden Prüfling von einem glühenden oder nicht brennenden Prüfling zu unterscheiden. Übersteigt beispielsweise die mittlere Helligkeit der Aufnahme des Prüflings einen ersten Schwellwert, so wird der Prüfling als brennend erkannt. Liegt die mittlere Helligkeit zwischen dem ersten und einem zweiten Schwellwert, dann wird der Prüfling als glühend eingestuft. Entsprechend wird durch die Bildverarbeitung erkannt, dass der Prüfling weder glüht noch brennt, wenn die mittlere Helligkeit kleiner ist als der zweite Schwellwert.

Nach einer Ausführungsform der Erfindung ist der Prüflinge im Wesentlichen rechteckig stabförmig ausgebildet. Der Prüfling wird an einer Fixierung aufgehängt, wobei die Längsachse des Prüflings senkrecht ausgerichtet wird. Mit der mindestens einen ersten Kamera werden Bilddaten einer ersten Oberflächenseite und einer zweiten Oberflächenseite aufgenommen. Die erste und zweite Oberflächenseite sind parallel zur Längsachse ausgerichtet und die erste und zweite Oberflächenseite sind im Wesentlichen senkrecht zueinander orientiert. Durch die Bildverarbeitung wird eine horizontal längs der ersten Oberflächenseite verlaufende erste Richtlinie und eine horizontal längs der zweiten Oberflächenseite verlaufende zweite Richtlinie ermittelt, wobei der Referenzpunkt dem Schnittpunkt der zur Stabmitte hin projizierten ersten und zweiten Richtlinie entspricht. In der Bildverarbeitung werden bevorzugterweise zwei Seiten des rechteckigen, stabförmigen Prüflings detektiert und ausgewertet, wobei jeweils eine Richtlinie für jede Oberflächenseite ermittelt wird, mittels denen dann der Referenzpunkt ermittelt wird.

Nach einer Ausführungsform der Erfindung verläuft die erste Richtlinie möglichst weit unten durch die erste Oberflächenseite des senkrecht aufgestellten Prüflings und weist zumindest eine erste vorgegebene Mindestlänge auf. Die zweite Richtlinie verläuft auf derselben Höhe wie die erste Richtlinie.

Nach einer Ausführungsform der Erfindung erfolgt ferner die Erfassung eines ersten Bereichs der ersten Oberflächenseite, wobei der erste Bereich die erste Oberflächenseite unterhalb der ersten Richtlinie umfasst. Ferner erfolgt die Detektion eines Fadens, falls der Bereich eine vorgegebene Mindesthöhe und eine vorgegebene Mindestbreite aufweist.

Nach einer Ausführungsform der Erfindung erfolgt ferner die Bilddatenerfassung eines zweiten Bereichs durch die mindestens eine erste Kamera, wobei der zweite Bereich zwischen dem Prüfling und dem Brenner liegt. Durch die Bildverarbeitung der mit der mindestens einen ersten Kamera aufgenommenen Bilddaten des zweiten Bereichs wird ein Tropfen detektiert, falls in den Bilddaten ein sich im zweiten Bereich bewegender Teil des Prüfling, der sich vom Prüfling abgelöst hat, detektiert wird. Der bewegende Teil entspricht einem vom Prüfling abgehenden Tropfen. Der Tropfen wird nach einer Ausführungsform der Erfindung nur detektiert, wenn er eine vorgegebene Mindestgröße hat und mit zumindest einer vorgegebenen Mindestgeschwindigkeit fällt. Bei der ersten Kamera handelt es sich daher bevorzugterweise um eine Hochgeschwindigkeitskamera, da damit der fallende Tropfen besonders einfach detektierbar ist.

Nach einer Ausführungsform der Erfindung erfolgt ferner die Positionierung von Baumwollwatte in einem vorgegebenen zweiten Abstand unterhalb des Prüflings, wobei die Baumwollwatte von mindestens einer vierten Kamera oder einem anderen optischen Detektor, wie etwa einem Infrarotsensor, optisch erfasst wird, wobei mittels Bildverarbeitung der mit der mindestens einen vierten Kamera oder dem optischen Detektor erfassten Bilddaten ermittelt wird, ob ein vom Prüfling abgehender Tropfen die Baumwollwatte entzündet. Die Baumwollwatte kann beispielsweise in Form einer Watterolle in einem Watterollenmagazin vorgehalten werden. Dabei ist das Watterollenmagazin ähnlich wie das oben genannte Probenmagazin mittels Silika-Gel abgeschirmt, um ein in einer Prüfnorm vorgegebenes Lagerklima zu erreichen. Durch ein Watte-Portionierungssystem kann ein Wattebausch von der Watterolle abgeschnitten werden und über ein Positionierungssystem in dem vorgegebenen zweiten Abstand unter den Prüfling gebracht werden. Das Watte-Portionierungssystem kann dabei so ausgebildet sein, dass der aus dem Watterollenmagazin herausgeschnittene Wattebausch eine Größe von 50 mm x 50 mm aufweist und ein Gewicht von 0,08 Gramm nicht überschreitet. Falls sich der Wattebausch beispielsweise durch herabtropfende und brennende Teile des Prüflings entzündet, kann dies ebenfalls über die Bildverarbeitung detektiert werden und der brennende Wattebausch kann mittels Stickstoffdüsen gelöscht werden.

Nach einer Ausführungsform der Erfindung wird der Prüfling für eine vorgegebene erste Zeitdauer beflammt, wobei der Brenner im vorgegebenen ersten Abstand unterhalb des Referenzpunkts positioniert wird, wobei die Mittelachse des Brenners vertikal ausgerichtet ist und wobei der erste Abstand während der Beflammung nachgeregelt wird. Ferner erfolgt die Umpositionierung des Brenners nach Ablauf der ersten Zeitdauer, so dass der Brenner keinen Einfluss mehr auf den Prüfling hat. Beispielsweise wird der Brenner in einer waagrechten Bewegungsrichtung auf einen Abstand von max. 150 Millimeter vom Prüfling entfernt. In einem weiteren Verfahrensschritt erfolgt die Ermittlung einer ersten Nachbrenndauer des Prüflings, wobei die erste Nachbrenndauer der Zeitspanne zwischen dem Ende der ersten Zeitdauer und dem Zeitpunkt des Erlöschens des Prüflings entspricht. Ferner wird der Prüfling für eine vorgegebene zweite Zeitdauer beflammt, sobald der Prüfling nicht mehr brennt. Im Anschluss daran erfolgt die Ermittlung der zweiten Nachbrenndauer des Prüflings, wobei die zweite Nachbrenndauer der Zeitspanne zwischen dem Ende der zweiten Zeitdauer und dem Zeitpunkt des Erlöschens des Prüflings entspricht. Die Mittelachse des Brenners wird während der Beflammung des Prüflings gekippt, falls ein Tropfen detektiert wird, wobei der Brenner ferner gegebenenfalls in einer waagrechten Bewegungsrichtung vom Prüfling entfernt wird, so dass der Tropfen die Brennerflamme nicht beeinflusst und wobei der Brenner wieder mit einer senkrecht ausgerichteten Mittelachse unterhalb des Prüflings im ersten Abstand positioniert wird, sobald der Tropfen abgegangen ist. In weiteren Verfahrensschritten erfolgt die Speicherung der ersten und zweiten Nachbrenndauern und gegebenenfalls die Speicherung der Information, dass ein Tropfen vom Prüfling abgegangen ist und ggf. Speicherung eines Brandes des unterhalb des Prüfling positionierten Wattebausches.

Nach einer Ausführungsform der Erfindung wird ferner mittels der von dem Prüfling aufgenommenen Bilddaten durch die Bildverarbeitung ermittelt, ob der Prüfling bis zu seiner Fixierung brennt oder glüht.

Nach einer Ausführungsform der Erfindung wird der brennende Prüfling, beispielsweise nach dem Ende der Brennprüfung, mittels Stickstoffdüsen gelöscht.

Nach einer Ausführungsform der Erfindung wird das Verfahren für insgesamt fünf Prüflinge desselben Werkstoffs durchgeführt. Ferner erfolgt eine Klassifizierung des Werkstoffs in die Klassen V-0, V-1 oder V-2 gemäß EN 60965-11-10. Dabei werden für die Klassifizierung die ersten und zweiten Nachbrenndauern, gegebenenfalls die Information, ob einer oder mehrere der fünf Prüflings bis zur Fixierung durchgebrannt oder durchgeglüht sind, und auch gegebenenfalls eine detektierte Entflammung der Baumwollwatte verwendet.

Nach einer Ausführungsform der Erfindung wird der Prüfling fünfmalig beflammt für jeweils eine vorgegebene dritte Zeitdauer. Der Brenner wird dabei im vorgegebenen ersten Abstand unterhalb des Referenzpunkts positioniert, so dass die Mittelachse des Brenners in etwa in einem Winkel von 20° zur Vertikalen ausgerichtet ist. Ferner wird der Abstand während der Beflammung nachgeregelt. Zur Beendigung der Beflammung wird jeweils der Brenner für eine vorgegebene vierte Zeitdauer umpositioniert, so dass er während der vierten Zeitdauer keinen Einfluss auf den Prüfling hat. Ferner wird eine dritte Nachbrenndauer des Prüflings im Anschluss an die fünfte Beflammung ermittelt. Die dritte Nachbrenndauer entspricht dabei dem Zeitraum zwischen der Beendigung der fünften Beflammung und dem Zeitpunkt des Erlöschens des Prüflings. Zudem erfolgt eine Speicherung der dritten Nachbrenndauer und gegebenenfalls erfolgt die Speicherung der Information, dass eine Entflammung des unterhalb der Probe positionierten Wattebausches erfolgt ist.

Nach einer Ausführungsform der Erfindung wird die dritte Nachbrenndauer für fünf Prüflinge eines Werkstoffs ermittelt. Die dritten Nachbrennerdauern der fünf Prüflinge und/oder eine detektierte Entflammung der Baumwollwatte werden für eine Klassifizierung des Werkstoffs, aus dem die Prüflinge bestehen, gemäß DIN EN 60695-11-20 verwendet.

Zur Durchführung einer Brennprüfung nach dieser Norm wird ermittelt, ob die Gesamtnachbrennzeit kleiner als 60 Sekunden ist oder nicht. Die Gesamtnachbrennzeit errechnet sich aus der Summe der dritten Nachbrenndauern, die für die fünf Prüflinge gemessen wurden. Falls die Gesamtnachbrennzeit kleiner ist als 60 Sekunden, ist die Prüfung für den Werkstoff bestanden. Andernfalls ist die Prüfung nicht bestanden. Im Fall einer bestandenen Prüfung erfolgt eine weitere Prüfung einer Platte, die aus dem Werkstoff besteht, wobei detektiert wird, ob die Beflammung nach einer gewissen Zeit zu einer Lochbildung in der Platte führt oder nicht. Bei Lochbildung erhält der Werkstoff die Klasse 5VB, wenn kein Loch gebildet wird 5VA.

Nach einer Ausführungsform der Erfindung ist der Prüfling im Wesentlichen rechteckig stabförmig ausgebildet. Ferner wird der Prüfling so fixiert, dass die Längsachse des Prüflings im Wesentlichen waagrecht verläuft und die Querachsen im Wesentlichen in einem Winkel von 45° zur Horizontalen ausgerichtet sind. Eine erste Marke und eine zweite Marke sind quer zur Längsachse angebracht. Die erste Marke ist dabei einen vorgegebenen vierten Abstand von einer dritten Oberflächenseite des Prüflings entfernt. Ferner ist die zweite Marke einen vorgegebenen fünften Abstand von der dritten Oberflächenseite entfernt. Die dritte Oberflächenseite verläuft dabei senkrecht zur Längsachse des Prüflings. Durch die Bildverarbeitung wird eine dritte Richtlinie für den Prüfling ermittelt, wobei die dritte Richtlinie längs der unteren Kante des Werkstoffs verläuft und wobei der Referenzpunkt der Schnittpunkt der dritten Richtlinie mit der dritten Oberflächenseite ist. Der Brenner wird im ersten Abstand zum Referenzpunkt so positioniert, dass die Mittelachse des Brenners die dritte Richtlinie in einem Winkel von 45°schneidet und die Spitze des Brenners auf der verlängerten Richtlinie liegt.

Nach einer Ausführungsform der Erfindung erfolgt die Beflammung des Prüflings während einer vorgegebenen fünften Zeitdauer oder bis die Flammenfront die erste Marke erreicht. Ferner wird eine sechste Zeitdauer ermittelt, wobei die sechste Zeitdauer der Zeitspanne, bis die Flammenfront von der ersten Marke ausgehend die zweite Marke erreicht, oder der Zeitspanne, bis die Flamme ausgehend von der ersten Marke erlischt, entspricht. In einem weiteren Verfahrensschritt wird durch die Bildverarbeitung der vom abgebrannten Prüfling aufgenommenen Bilddaten eine Beschädigungslänge des Prüflings ermittelt, falls die Flammenfront vor Erreichen der zweiten Marke erlischt. Die sechste Zeitdauer und gegebenenfalls die Beschädigungslänge werden abgespeichert.

Nach einer Ausführungsform der Erfindung erfolgt eine Klassifizierung des Werkstoffs in die Klassen HB40 oder HB75 gemäß EN 60695-11-10 unter Verwendung der für drei Prüflinge ermittelten sechsten Zeitdauern und gegebenenfalls der Beschädigungslängen.

In einem anderen Aspekt wird die Aufgabe erfindungsgemäß durch eine Vorrichtung zur Durchführung einer Brennprüfung an einem Prüfling mit mindestens einer ersten Kamera zur optischen Erfassung des Prüflings und Mitteln zur Bildverarbeitung der mit der mindestens einen ersten Kamera aufgenommenen Bilddaten gelöst, wobei die Vorrichtung Mittel zur Ermittlung eines Referenzpunktes des Prüflings anhand der aufgenommenen Bilddaten und Mittel zur vollautomatischen Positionierung eines Brenners in einem vorgegebenen ersten Abstand zum Referenzpunkt hat, wobei der Brenner zur Beflammung des Prüflings vorgesehen ist.

In einem weiteren Aspekt betrifft die Erfindung ein Computerprogrammprodukt mit computerausführbaren Instruktionen zur Durchführung des erfindungsgemäßen Verfahrens.

Im Weiteren werden bevorzugte Ausführungsformen der Erfindung mit Bezugnahme auf die Zeichnungen näher erläutert. Es zeigen:
Fig. 1 ein Blockdiagramm einer Vorrichtung zur Durchführung einer Brandprüfung,
Fig. 2 ein Flussdiagramm, das Schritte des erfindungsgemäßen Verfahrens wiedergibt,
Fig. 3 ein Positionierungssystem für die Positionierung der Kameras und des Brenners,
Fig. 4 eine Aufnahme einer ersten Oberflächenseite des Prüflings,
Fig. 5 eine Aufnahme einer zweiten Oberflächenseite des Prüflings,
Fig. 6A schematisch die erste Oberflächenseite des Prüflings mit einer ersten Richtlinie,
Fig. 6B schematische die zweite Oberflächenseite des Prüflings mit einer zweiten Richtlinie,
Fig. 6C einen Schnitt durch den Prüfling quer zu seiner Längsachse und durch den Referenzpunkt,
Fig. 7 ein Blockdiagramm einer Vorrichtung zur Durchführung einer Brandprüfung,
Fig. 8 ein Flussdiagramm, das wesentliche Schritte zur Durchführung der Vertikal-Brennprüfung gemäß EN 60695-11-10 zeigt,
Fig.9 schematisch die Anordnung von Prüfling und Brenner bei der Vertikal-Brennprüfung nach EN 60695-11-10,
Fig. 10 schematisch das Wegkippen des Brenners während der Beflammung des Prüflings zur Vermeidung, dass vom Prüfling abgehende Tropfen die Brennerflamme beeinflussen,
Fig. 11 schematisch die Anordnung von Prüfling und Brenner bei der Horizontal-Brennprüfung gemäß EN 60695-11-10.

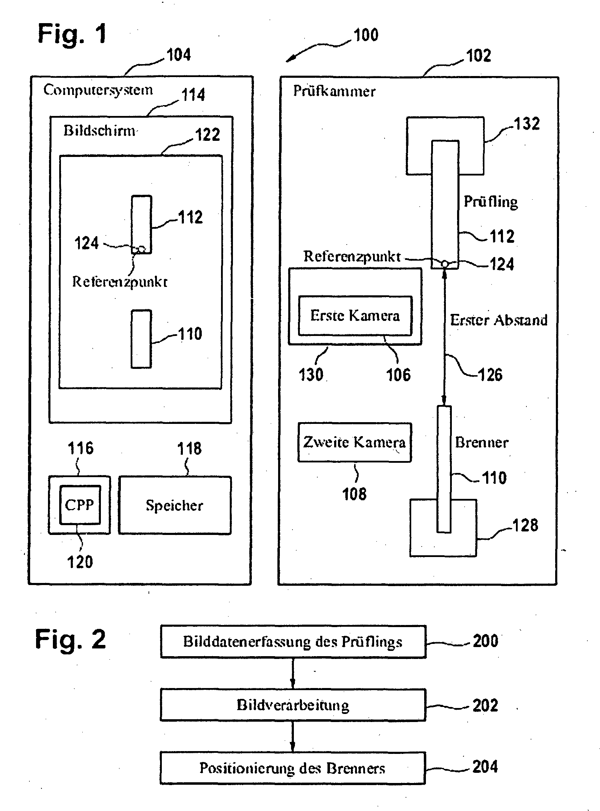

Fig. 1 zeigt ein Blockdiagramm einer Vorrichtung 100 zur Durchführung einer Brandprüfung. Die Vorrichtung 100 hat eine Prüfkammer 102 und ein Computersystem 104. Die Prüfkammer 102 weist ein Positioniersystem 128 für einen Brenner 110 auf. Ferner hat die Prüfkammer 102 ein Positionierungssystem 130 für eine erste Kamera 106 und eine Haltevorrichtung 132 für einen Prüfling 112. In der Prüfkammer 102 gibt es ferner eine zweite Kamera 108. Das Computersystem 104 weist einen Bildschirm 114, einen Mikroprozessor 116 und einen Speicher 118 auf. Der Mikroprozessor 116 des Computersystems 104 führt ein Computerprogrammprodukt 120 aus.

Mittels des Positionierungssystems 128 kann der Brenner 110 in allen drei Raumrichtungen verfahren werden. Mittels des Positionierungssystems 130 wird ferner die erste Kamera 106 so positioniert, dass von der ersten Kamera 106 der Prüfling 112 optisch erfasst wird.

Die von der ersten Kamera 106 von dem Prüfling 112 gemachten Bilddaten werden an das Computersystem 104 übermittelt. Das Computerprogrammprodukt 120 dient zur Bildverarbeitung der über die erste Kamera 106 gemachten Bilddaten. Ein Abbild 122 des Prüflings 112 kann beispielsweise auf dem Bildschirm 114 dargestellt werden. Durch Analyse des Abbildes 122 können durch das Computerprogrammprodukt 120 die Umrisse des Prüflings 112 ermittelt werden. Damit kann die Position des Prüflings 112 in der Prüfkammer durch die Bildverarbeitung erfasst werden und es kann ein Referenzpunkt 124 im Prüfling ermittelt werden. Das Computerprogrammprodukt 120 steuert nun das Positionierungssystem 128 so, dass der Brenner 110 in einem vorgegebenen ersten Abstand 126 zum Referenzpunkt positioniert wird. Bevorzugterweise wird der erste Abstand 126 zwischen dem Referenzpunkt 124 und dem Brenner 110 in Bezug auf die Brennerspitze gemessen.

Der erste Abstand 126 kann beispielsweise anhand eines Referenzbildes kalibriert werden. Dazu wird ein Bild von dem Prüfling 112 und dem Brenner 110 über die erste Kamera 106 aufgenommen, wobei der Brenner in Bezug zum Referenzpunkt 124 im ersten Abstand, z. B. von einer Bedienperson der Vorrichtung, positioniert worden ist. Die Bilddaten des Referenzbildes werden vom Computerprogrammprodukt 120 im Speicher 118 abgelegt. Während der Beflammung des Prüflings 112 durch den Brenner 110 werden von der ersten Kamera 106 Bilddaten das Brenners 110 und des Prüflings kontinuierlich erfasst und das Computerprogrammprodukt 112 errechnet aus dem aktuellen Abbild 122 des Prüflings 112 und des Brenners 110 ständig den Abstand zwischen Brenner 110 und Referenzpunkt 124 (dabei wird der Referenzpunkt 124 ständig neu ermittelt) und vergleicht den aktuell bestimmten Abstand in dem Abbild 122 mit dem in den Bilddaten des Referenzbilds vorgegebenen Abstand. Falls darin eine Diskrepanz detektiert wird, regelt das Computerprogrammprodukt den Abstand des Brenners 110 in der Prüfkammer 102 auf den ersten Abstand 126 nach.

Die zweite Kamera 108 dient zur Erfassung der Brennerflamme. Dazu ist die zweite Kamera 108 so in der Prüfkammer 102 angebracht, dass damit die Brennerflamme des Brenners 110, z.B. vor der Beflammung des Prüflings 112 erfassbar ist. Die von der zweiten Kamera 108 aufgenommenen Bilddaten werden vom Computerprogrammprodukt 120 verarbeitet. Dabei wird die Farbe der Flamme beispielsweise nach dem rgb-Farbmodell bestimmt. Nach dem rgb-Farbmodell wird eine Farbe gemäß ihrem roten, grünen und blauen Lichtanteil (jeweils zwischen 0% und 100%) beschrieben. Die ermittelte Farbe der Brennerflamme wird dann mit einer vorgegebenen Farbe einer Soll-Flamme verglichen. Die Soll-Flamme entspricht dabei einer Brennerflamme, die auf eine vorgegebene Nennleistung, beispielsweise 50 Watt gemäß EN 60695-11-10, eingestellt ist. Entspricht die Brennerflamme nicht der Soll-Flamme, so wird vom Computerprogrammprodukt 120 ein Austausch des Brenners durch einen anderen Brenner initiiert. Dazu legt das Positionierungssystem 128 den Brenner 110 in einem hier nicht gezeigten Brennermagazin ab, in dem weitere Brenner vorgehalten werden und entnimmt einen der weiteren Brenner dem Brennermagazin, der dann zur Beflammung des Prüflings eingesetzt wird.

Fig. 2 zeigt ein Flussdiagramm, das Schritte des erfindungsgemäßen Verfahrens zur Durchführung einer Brennprüfung an einem Prüfling wiedergibt. In Schritt 200 erfolgt die Bilddatenerfassung des Prüflings mit mindestens einer ersten Kamera. In Schritt 202 werden die mit der mindestens einen ersten Kamera aufgenommenen Bilddaten verarbeitet, wobei ein Referenzpunkt des Prüflings ermittelt wird. Ferner erfolgt in Schritt 204 die Positionierung eines Brenners in einem vorgegebenen ersten Abstand zum Referenzpunkt zur Beflammung des Prüflings.

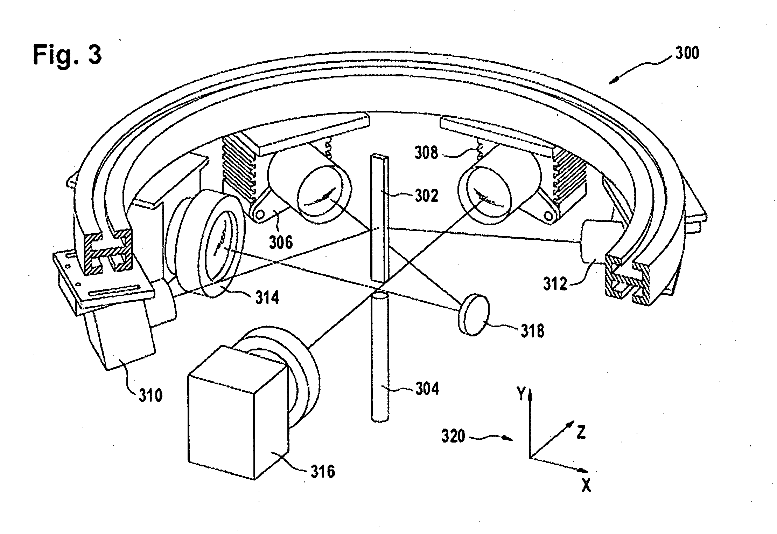

Fig. 3 zeigt ein Positionierungssystem 300 zur Positionierung der Kameras und des Brenners. Das Positionierungssystem weist Kameras 306, 308, 310 und 312 auf. Ferner weist das Positionierungssystem 300 Rotlichtstrahler 314 und 316 sowie einen Spiegel 318 auf. Die Kameras 306 und 308 dienen zur Bilddatenerfassung des Prüflings 302 und des Brenners 304. Durch die Verwendung der beiden Kameras 306 und 308 kann der Prüfling 302 von zwei Seiten kontinuierlich optisch erfasst werden. Eine Lage- und/oder Formänderung des Prüflings, beispielsweise eine Ausdehnung des Prüflings längs der Y-Achse (vgl. Koordinatensystem 320) oder eine Schrumpfung des Prüflings 302 in Bezug auf die Y-Achse, beispielsweise durch Verbrennen des Prüflings, oder eine Bewegung des Prüflings in der X-Z-Ebene kann somit optisch erfasst werden und von der Bildverarbeitung entsprechend detektiert werden. Damit kann stets der aktuelle Referenzpunkt des Prüflings ermittelt werden. Durch das Positionierungssystem 300 kann ferner der Brenner 304 so nachgeregelt werden, dass dessen Spitze im ersten Abstand zum Referenzpunkt entfernt positioniert ist. Ferner lassen sich die Kameras 306 und 308 so nachfahren, dass die Kameras 306 und 308 den Prüfling 302 in der Bildmitte erfassen.

Zur Unterdrückung der Detektion der Brennerflamme bzw. um zu verhindern, dass die Aufnahme des Prüflings durch die Kamera 308 durch einen brennenden Prüfling verschlechtert wird, wird der Prüfling 302 sowie die Kamera 308 vom Rotlichtstrahler 316 ausgeleuchtet. Dadurch werden für die Kamera 308 Flammen ausgeblendet. Ebenso leuchtet der Rotlichtstrahler 314 den Prüfling 302 und die Kamera 306 aus, wodurch Flammen von der Kamera 306 nicht mehr detektiert werden. Das Licht des Rotlichtstrahlers 314 wird dabei über den Spiegel 318 umgelenkt, damit sich das System 300 etwas kompakter bauen lässt.

Mit den Kameras 310 und 312 wird detektiert, ob der Prüfling 302 brennt. Dazu werden sie vom Positionierungssystem 300 so um den Prüfling positioniert, dass der Prüfling 302 von den Kameras optisch erfassbar ist. Bei den Kameras 310 und 312 handelt es sich um Farbkameras, die ständig Bilder an die Bildverarbeitung liefern, wodurch durch Analyse der Bilddaten festgestellt werden kann, ob der Prüfling 302 brennt.

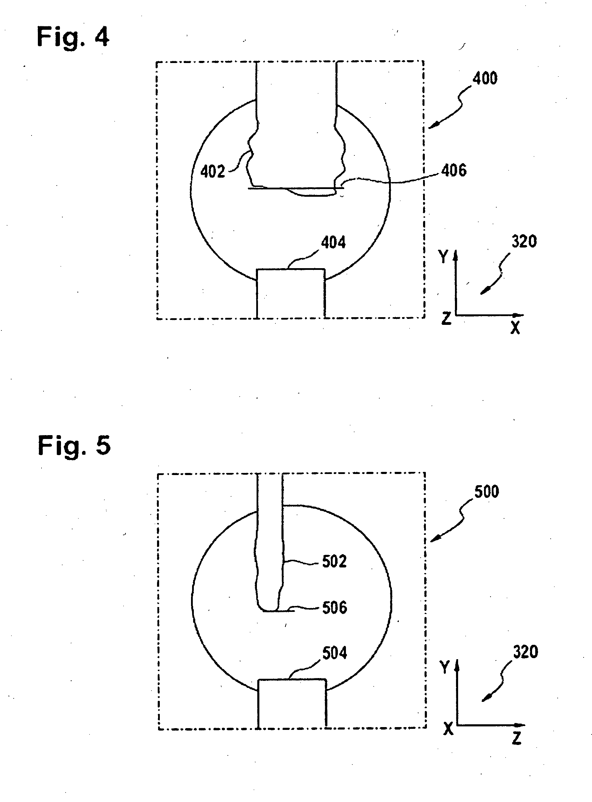

Fig. 4 zeigt die Aufnahme 400 einer ersten Oberflächenseite 402 des Prüflings sowie der Brennerspitze 404. Die Oberflächenseite 402 ist längs der X-Y-Ebene (vgl. Koordinatensystem 320 aus Fig. 3) orientiert und kann beispielsweise von der Kamera 306 (vgl. Fig. 3) aufgenommen worden sein. Durch die Bildverarbeitung der Aufnahme 400 können die Umrisse der Oberflächenseite 402 des Prüflings ermittelt werden. Anhand der so gewonnenen Informationen kann eine horizontal, also längs der X-Achse, verlaufende erste Richtlinie 406 ermittelt werden.

Fig. 5 zeigt eine Aufnahme 500 einer zweiten Oberflächenseite 502 des Prüflings und der Brennerspitze 504. Die Oberflächenseite 502 ist in der Y-Z-Ebene (vgl. Koordinatensystem 320 aus Fig. 3) orientiert und kann beispielsweise von der Kamera 308 (vgl. Fig. 3) aufgenommen worden sein. Durch die Bildverarbeitung der Aufnahme 500 können die Umrisse der zweiten Oberflächenseite 502 ermittelt werden. Damit lässt sich eine zweite Richtlinie 506, die längs der Z-Achse verläuft, für die zweite Oberflächenseite ermitteln.

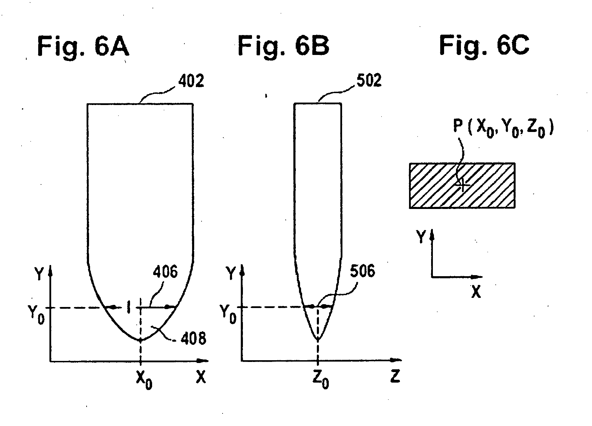

Fig. 6A zeigt schematisch die erste Oberflächenseite 402 mit der ersten Richtlinie 406. Die erste Richtlinie 406 wird dabei so bestimmt, dass sie über eine vorgegebene Mindestlänge (1) längs der X-Achse und möglichst weit unten in Bezug auf die Y-Richtung durch die erste Oberflächenseite 402 verläuft. Ferner wird durch die Bilddatenverarbeitung ein erster Bereich 408 ermittelt, der dem Teil des Prüflings entspricht, der sich unterhalb der ersten Richtlinie befindet. Weist der erste Bereich 408 eine Mindesthöhe (Abstand zwischen Unterkante des Prüflings zur ersten Richtlinie 406) und eine Mindestbreite auf (mittlere Breite des ersten Bereichs längs der X-Achse), so wird der erste Bereich von der Bildverarbeitung als Faden identifiziert, der beispielsweise auf einen in Kürze abgehenden Tropfen hinweist.

Durch die erste Richtlinie 406 werden ferner zwei von drei Koordinaten des Referenzpunktes (X₀, Y₀, Z₀) festgelegt. Zum einen ergibt sich die Y-Koordinate des Referenzpunktes (Y₀) aufgrund dessen, dass die erste Richtlinie lotrecht zur Y-Achse verläuft. Die X-Koordinate des Referenzpunktes (X₀) ergibt sich aus der X-Koordinate des Mittelpunktes der ersten Richtlinie 406.

Fig. 6B zeigt schematisch die zweite Oberflächenseite 502 mit der zweiten Richtlinie 506. Zum einen wird die Richtlinie 506 dabei so durch die zweite Oberflächenseite 502 gelegt, dass sie auf derselben Höhe in Bezug auf die Y-Achse verläuft wie die erste Richtlinie 406. Durch die zweite Richtlinie 506 kann dann die letzte fehlende Koordinate für den Referenzpunkt (Z₀) festgelegt werden. Diese ergibt sich aus der Z-Koordinate des Mittelpunkts der Referenzlinie 506.

Fig. 6C zeigt einen Schnitt durch den stabförmigen und im Wesentlichen rechteckig ausgebildeten Prüfling quer zu seiner Längsrichtung, also einen Schnitt durch die X-Z-Ebene. Durch die Ermittlung des Referenzpunkts wie in den Fig. 6A und 6B beschrieben, liegt somit der Referenzpunkt P(X₀, Y₀, Z₀) im Wesentlichen in der Mitte des Prüflings.

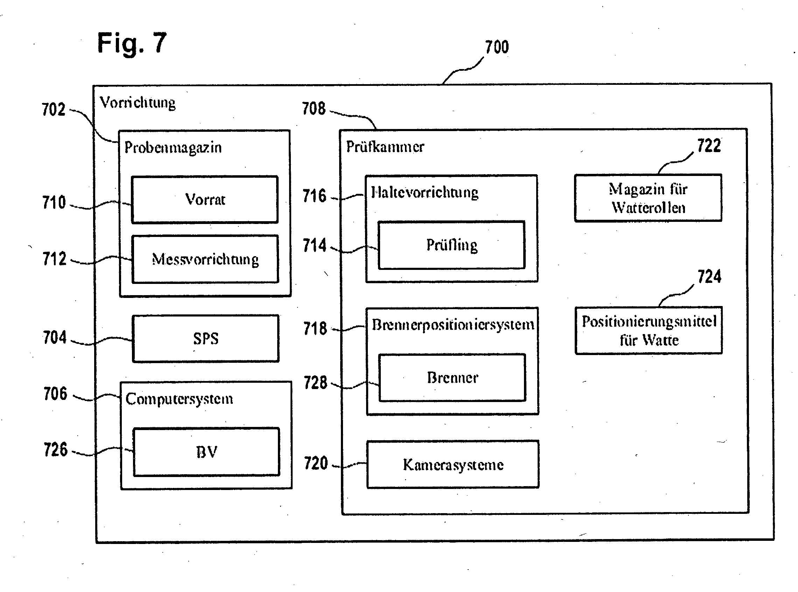

Fig. 7 zeigt ein Blockdiagramm einer Vorrichtung 700 zur Durchführung einer Brandprüfung. Die Vorrichtung 700 weist ein Probenmagazin 702, eine speicherprogrammierbare Steuerung 704, ein Computersystem 706 und eine Prüfkammer 708 auf. Das Probenmagazin 702 enthält einen Vorrat 710 an Prüflingen, die einer Brandprüfung zu unterziehen sind. Ferner enthält das Probenmagazin 702 eine Messvorrichtung 712. Die vorrätig gehaltenen Prüflinge weisen dabei beispielsweise ein Probenabmaß von 12,7 mm x 127 mm und eine Dicke im Bereich von 0,5 mm bis 3,5 mm auf. Der Vorrat 710 an Prüflingen umfasst beispielsweise 250 Prüflinge. Der Vorrat 710 wird im Probenmagazin 702 unter den klimatischen Bedingungen, die von der Prüfung zugrunde gelegte Norm vorschreibt, gelagert. Beispielsweise schreibt die Norm EN 60695-11-10 eine Lagerung des Vorrats 710 von mindestens 48 Stunden bei (23 ±2) °C und einer Luftfeuchte von (50 ±5) % vor.

Zur Durchführung der Brandprüfung an einem Prüfling aus dem Vorrat 710 wird ein Prüfling 714 aus dem Probenmagazin entnommen und der Prüfkammer 708 zugeführt. Zuvor wird die Dicke des Prüflings noch mittels der Messvorrichtung 712 ermittelt. Die Umpositionierung des Prüflings 714 vom Probenmagazin in die Prüfkammer kann dabei vollautomatisch und von der speicherprogrammierbaren Steuerung 704 gesteuert vonstatten gehen.

Die Prüfkammer 708 weist eine Haltevorrichtung 716 für den Prüfling 714 auf. Ferner hat die Prüfkammer 708 ein Brenner-Positioniersystem 718, Kamerasysteme 720, ein Magazin 722 für eine Watterolle und Positionierungsmittel 724 für Watte. Der Prüfling 714 wird von der Haltevorrichtung 716 aufgenommen und so fixiert, dass er von den Kamerasystemen 720 erfasst werden kann. Das Brenner-Positionierungssystem 718 kann ferner einen Brenner 728 im ersten vorgegebenen Abstand in Bezug auf einen über eine Bildverarbeitungs-Komponente 726 des Computersystems 706 bestimmten Referenzpunkt, wie zuvor beschrieben, positionieren. Die Kamerasysteme 720 liefern dabei ständig Bilddaten des Prüflings 714 und des zur Beflammung des Prüflings 714 verwendeten Brenners 728 an die Bildverarbeitung 726, so dass von der Bildverarbeitung 726 initiiert und von der speicherprogrammierbaren Steuerung 704 gesteuert, das Brenner-Positioniersystem 718 den Brenner 728 auch während der Beflammung des Prüflings 714 im ersten Abstand zum Prüfling halten kann.

In dem Magazin 722 für Watterolle wird mindestens eine Watterolle vorgehalten, aus der über ein Trenn- und Zuführsystem Watte, z.B. in den Maßen 50 mm x 50 mm x 6 mm, abgetrennt wird und den Positionierungsmitteln 724 zugeführt wird. Die Watte wird dann unter den Prüfling von den Positionierungsmitteln 724 gelegt. Die Watte dient als Indikator für brennende Tropfen. Dazu wir die Watte bevorzugterweise im Trenn- und Zuführsystem, z.B. durch Anblasen mit einem Stickstoffstrahl, aufgelockert. Ferner sind Stickstoffdüsen zum Ausblasen eines brennenden Wattebausches vorgesehen.

Die Vorrichtung 700 kann ferner ein hier nicht dargestelltes Abfall-Magazin aufweisen, in dem verbrauchte Watte und verbrauchte Prüflinge, jeweils getrennt, entsorgt werden.

Ferner kann die Prüfvorrichtung 700 ein Magazin aufweisen, in dem Haltevorrichtungen vorgehalten werden. Die Haltevorrichtungen, wie Haltevorrichtung 716, weisen typischerweise einen Greifer auf, mit dem der Prüfling 714 umklammert wird. Der Greifer kann verschmutzt werden, z.B. wenn der Prüfling 714 bis zum Greifer abbrennt. Durch das Vorhalten von mehreren Haltevorrichtungen im Magazin kann daher die Haltevorrichtung vollautomatisch, und ohne dass eine Reparatur der Anlage nötig ist, ausgetauscht werden. Die verschmutzen Haltevorrichtungen werden dabei auch im Abfall-Magazin, getrennt von der Watte und den Prüflingen, entsorgt. Um den Greifer bzw. und den beflammten Prüfling können ferner einen oder mehrere Stickstoffdüsen zum Ausblasen eines brennenden Prüflings angebracht sein.

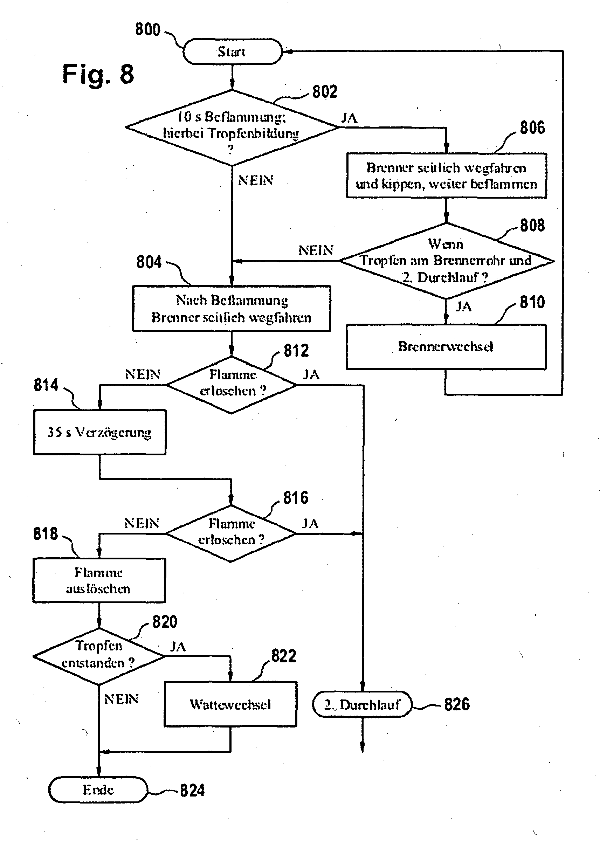

Fig. 8 zeigt ein Flussdiagramm, das wesentliche Schritte zur Durchführung einer Vertikal-Brennprüfung gemäß EN 60695-11-10 zeigt. In Schritt 800 beginnt die Beflammung des Prüflings für 10 Sekunden. Während der Beflammung wird in Schritt 802 über die Bildverarbeitung festgestellt, ob dabei eine Tropfenbildung stattfindet. Falls kein Tropfen während der Beflammung detektiert wird, wird in Schritt 804 nach Ablauf der 10 Sekunden der Brenner seitlich weggefahren, so dass dieser keinen Einfluss auf den Prüfling hat. Falls in Schritt 802 eine Tropfenbildung detektiert wird, wird der Brenner in Schritt 806 seitlich weggefahren und gekippt, so dass dieser den Prüfling weiter beflammt. In Schritt 808 wird detektiert, wenn der Tropfen vom Prüfling abgeht. Falls der Tropfen auf das Brennerrohr trifft, erfolgt in Schritt 810 ein Brennerwechsel und das Verfahren wird in Schritt 800 mit einem neuen Prüfling wieder neu gestartet. Falls in Schritt 808 detektiert wird, dass der abgehende Tropfen den Brenner nicht beeinflusst hat, wird die Beflammung bis zum Ablauf der 10 Sekunden fortgesetzt und dann in Schritt 804 der Brenner nach der Beflammung seitlich weggefahren.

In Schritt 812 wird die Nachbrennzeit des Prüflings detektiert. Erlischt der Prüfling innerhalb von 35 Sekunden, dann wird das Verfahren mit Schritt 826 fortgeführt, wobei die Verfahrensschritte 800 bis 812 am selben Prüfling erneut durchgeführt werden zur Ermittlung einer zweiten Nachbrennzeit. Erlischt der Prüfling nicht nach 35 Sekunden wird in Schritt 814 die Flamme für weitere 35 Sekunden beobachtet. Wird in Schritt 816, nach Ablauf der 35 Sekunden, festgestellt, dass die Flamme erloschen ist, wird das Verfahren mit Schritt 826 fortgesetzt, wobei die Verfahrensschritte 800 bis 812 am selben Prüfling erneut durchgeführt werden zur Ermittlung einer zweiten Nachbrennzeit. Wird in Schritt 816 festgestellt, dass die Flamme nicht erloschen ist, denn wird im Schritt 818 die Flamme, beispielsweise durch Beblasen des Prüflings mit Stickstoff, gelöscht. Ferner wird in Schritt 820 ermittelt, ob ein Tropfen vom brennenden Prüfling abgegangen ist. Ist dies der Fall, wird in Schritt 822 die unter dem Prüfling platzierte Watte durch neue Watte ausgetauscht und das Verfahren mit Schritt 824 beendet. Andernfalls wird im Anschluss an Schritt 820 das Verfahren direkt mit Schritt 824 beendet.

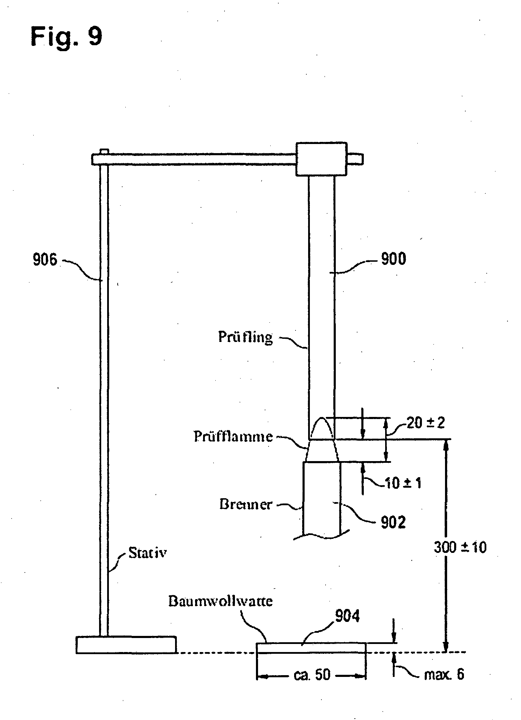

Fig. 9 zeigt schematisch die Anordnung von Prüfling 900 und Brenner 902 bei der Vertikal-Brennprüfung nach EN 60695-11-10. Der Prüfling 900 ist dabei stabförmig rechteckig ausgebildet. Er ist an der Fixierung 906 (hier ein Stativ) so aufgehängt, dass seine Längsachse vertikal ausgerichtet ist.
Die Spitze des Brenners befindet sich im Abstand von 10 ± 1 mm unter der Unterkante des Prüflings, wobei die Längsachse des Prüflings 900 mit der Mittelachsen des Brenners 902 zusammenfallen. Ferner wird Baumwollwatte 904 im Abstand von 300 ± 10 mm zur Unterkante des Prüflings gelegt. Dabei hat die Baumwollwatte 904 die Abmaße 50x50x6 mm.

Vor der Beflammung und solange der Prüfling nicht brennt, entspricht der von der Bildverarbeitung ermittelte Referenzpunkt im Wesentlichen dem Schnittpunkt der Längsachse des Prüflings 900 mit der Unterkante des Prüflings 900. Brennt der Prüfling jedoch oder dehnt sich der Prüfling aufgrund der Einwirkung der Flammen aus, so ändert der Referenzpunkt seine Lage. Durch die Nachführung des Brenners 902 über das hier nicht gezeigte Brenner-Positionierungssystem (vgl. Fig. 7) kann der Abstand zwischen Brennerspitze und Referenzpunkt auf 10 ± 1 mm geregelt werden.

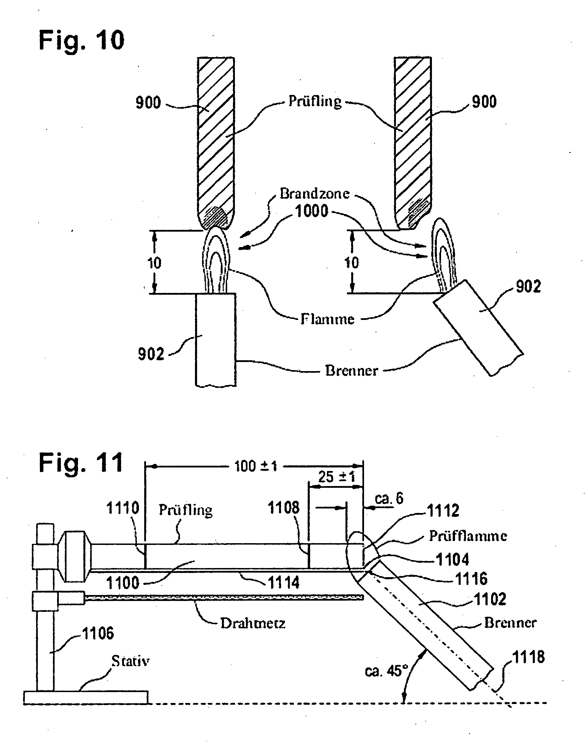

Fig. 10 zeigt schematisch das Wegkippen des Brenners 902 während der Beflammung des Prüflings 900 (vgl. Fig. 9) zur Vermeidung, dass vom Prüfling abgehende Tropfen die Brennerflamme beeinflussen. Der linke Teil der Fig. 10 zeigt dabei den Brenner 902 im Abstand von 10 mm unter dem Prüfling 900, wie in Fig. 9 beschrieben. Durch die Bildverarbeitung der von der mindestens einen ersten Kamera aufgenommenen Bilddaten (vgl. Fig. 1) wird die Brandzone 1000 zwischen Brenner 902 und Prüfling 900 erfasst. Dabei handelt es sich bei der ersten Kamera vorzugsweise um eine Hochgeschwindigkeitskamera, so dass vom Prüfling 900 abfallende Teile durch die Bildverarbeitung detektiert werden können. Bei der Detektion eines solchen abfallenden Teils, d.h. bei der Detektion eines Tropfens, wird der Brenner, wie im rechten Teil der Fig. 10 gezeigt, seitlich weggeschwenkt, so dass der Tropfen nicht die Brennerflamme beeinflussen kann. Dabei wird die Mittelachse des Brenners um bis zu 45° geneigt und der Brenner seitlich vom Prüfling wegbewegt, wobei jedoch eine weitere Beflammung des Prüfling stattfindet und der Abstand in vertikaler Richtung zwischen Brennerspitze und Referenzpunkt auf 10 mm geregelt wird. Nachdem der Tropfen die Brandzone 1000 passiert hat, wird der Brenner wieder in die im linken Bildteil dargestellte Position zurückgefahren.

Fig. 11 zeigt schematisch die Anordnung von Prüfling 1100 und Brenner 1102 bei der Horizontal-Brennprüfung gemäß EN 60695-11-10. Der Prüfling ist dabei im Wesentlichen rechteckig stabförmig ausgeführt. Der Prüfling 1100 wird von einer Fixierung 1106 so gehalten, dass seine Längsachse horizontal ausgerichtet ist und seine Querachsen im Wesentlichen in einem Winkel von 45° zur Horizontalen ausgerichtet sind. Am Prüfling sind eine erste Marke 1108 und eine zweite Marke 1110 angebracht. Die erste Marke 1108 befindet sich im Abstand von 25 ± 1 mm zu einer Oberfläche 1112 des Prüflings und die zweite Marke 1110 befindet sich im Abstand 100 ± 1 mm zur Oberfläche 1112. Durch die optische Erfassung des Prüflings durch die hier nicht dargestellte erste Kamera und durch anschließende Bildverarbeitung der so aufgenommenen Bilddaten wird eine Referenzlinie 1114 ermittelt, wobei die Referenzlinie der Unterkante des Prüflings 1110 entspricht. Der Referenzpunkt 1104 wird von der Bildverarbeitung als Schnittpunkt zwischen der Referenzlinie 1114 und der Oberfläche 112 ermittelt.

Der Brenner 1102 wird nun zur Beflammung des Prüflings 1100 so positioniert, dass seine Mittelachse 1118 im einem Winkel von ca. 45° zur Vertikalen verläuft und dass die Spitze 1116 das Brenners auf der (verlängerten) Referenzlinie 1114 liegt, wobei der Abstand zwischen Spitze 1116 und Referenzpunkt 1104 einem vorgegebenen Wert entspricht. Der vorgegebene Wert kann dabei so eingestellt sein, dass das freie Ende des Prüflings auf einer Länge von ca. 6 mm beflammt wird. Während der Beflammung wird der Prüfling ferner erfindungsgemäß von mindestens einer Kamera optisch erfasst und die so gewonnenen Bilddaten werden über die Bildverarbeitung ausgewertet. Dadurch lassen sich die Zeitpunkte ermitteln, an denen die Flammen die erste Marke 1108 und die zweite Marke 1110 erreichen. Alternativ lässt sich ermitteln, zu welchem Zeitpunkt nach Erreichen der ersten Marke 1108 die Flammen erlischen und wie lange dabei die Beschädigungslänge des Prüflings ist, z.B. durch Vergleich mit einem Referenzbild eines unbeschädigten Prüflings. Aus den so gewonnen Daten kann anhand einer Beflammung von mehreren Prüflingen der Werkstoff, aus dem die Prüflinge bestehen, in die von der Norm EN 60695-11-10 vorgegebenen Klassen klassifiziert werden.

Bezugszeichenliste:
- 100: Vorrichtung
- 102: Prüfkammer
- 104: Computersystem
- 106: erste Kamera
- 108: zweite Kamera
- 110: Brenner
- 112: Prüfling
- 114: Bildschirm
- 116: Mikroprozessor
- 118: Speicher
- 120: Computerprogrammprodukt
- 122: Abbild
- 124: Referenzpunkt
- 126: erster Abstand
- 128: Positionierungssystem
- 130: Positionierungssystem
- 132: Haltevorrichtung
- 300: Positionierungssystem
- 302: Prüfling
- 304: Brenner
- 306: Kamera
- 308: Kamera
- 310: Kamera
- 312: Kamera
- 314: Rotlichtstrahler
- 316: Rotlichtstrahler
- 318: Spiegel
- 320: Koordinatensystem
- 400: Aufnahme
- 402: erste Oberflächenseite
- 404: Brennerspitze

- 406: erste Richtlinie
- 408: erster Bereich
- 500: Aufnahme
- 502: zweite Oberflächenseite
- 504: Brennerspitze
- 506: zweite Richtlinie
- 700: Vorrichtung
- 702: Probenmagazin
- 704: Speicherprogrammierbare Steuerung
- 706: Computersystem
- 708: Prüfkammer
- 710: Vorrat
- 712: Messvorrichtung
- 714: Prüfling
- 716: Haltevorrichtung
- 718: Brenner-Positionierungssystem
- 720: Kamerasysteme
- 722: Magazin und Portionierungseinheit für Watterolle
- 724: Positionierungsmittel für Watte
- 726: Bildverarbeitung
- 900: Prüfling
- 902: Brenner
- 904: Baumwollwatte
- 906: Fixierung
- 1000: Brandzone
- 1100: Prüfling
- 1102: Brenner
- 1104: Referenzpunkt
- 1106: Fixierung
- 1108: erste Marke
- 1110: zweite Marke
- 1112: Oberfläche
- 1114: Richtlinie
- 1116: Spitze des Brenners
- 1118: Mittelachse

## Patentansprüche

1. Verfahren zur Durchführung einer Brennprüfung an einem Prüfling (112) mit den Schritten:
- Bilddatenerfassung des Prüflings mit mindestens einer ersten Kamera (106);
- Bildverarbeitung der mit der mindestens einen ersten Kamera aufgenommenen Bilddaten, wobei ein Referenzpunkt (124) des Prüflings ermittelt wird;
- vollautomatische Positionierung eines Brenners in einem vorgegebenen ersten Abstand (126) zum Referenzpunkt zur Beflammung des Prüflings, wobei die mindestens eine erste Kamera ferner ein Interferenz-bandpassfilter zur Unterdrückung der Detektion der Brennerflamme aufweist und/oder wobei die mindestens eine erste Kamera (306, 308) und der Prüfling von einem Rotlichtstrahler (314, 316) zur Unterdrückung der Detektion der Brennerflamme bestrahlt werden.

2. Verfahren nach Anspruch 1, wobei die mindestens eine erste Kamera ferner einen Polarisationsfilter aufweist, wobei das Licht von dem Rotlichtstrahler oder den Rotlichtstrahlern linear polarisiert wird, wobei der Polarisationsfilter der ersten Kamera so ausgerichtet ist, dass es eine geringe Filterwirkung für das linear polarisierte Licht aufweist.

3. Verfahren nach einem der vorhergehenden Ansprüche, ferner mit den Schritten:
- Bildverarbeitung der mit mindestens einer zweiten Kamera (108) aufgenommenen Bilddaten der Brenner-flamme, wobei aus den aufgenommenen Bilddaten die Farbe der Brennerflamme ermittelt wird, wobei die Farbe mit der Farbe einer Soll-Flamme verglichen wird;
- Austausch des Brenners, falls anhand der Bildverarbeitung detektiert wird, dass die Farbe der Brennerflamme nicht der Farbe der Soll-Flamme entspricht.

4. Verfahren nach einem der vorhergehenden Ansprüche, ferner mit dem Schritt der Umpositionierung des Prüflings an einem Probenmagazin (702) in eine Position, in der der Prüfling von der mindestens einen ersten Kamera optisch erfassbar ist und vom Brenner beflammbar ist, wobei das Probenmagazin für die Aufnahme von einer Vielzahl von Prüflingen vorgesehen ist.

5. Verfahren nach einem der vorhergehenden Ansprüche, ferner mit den Schritten:
- Bildverarbeitung der mit mindestens einer dritten Kamera (310, 312) aufgenommenen Bilddaten des Prüflings;
- Ermittlung anhand der mit der mindestens einen dritten Kamera aufgenommenen Bilddaten, ob der Prüfling brennt.

6. Verfahren nach Anspruch 5, ferner mit dem Schritt der Ermittlung anhand der mit der mindestens einen dritten Kamera aufgenommenen Bilddaten, ob der Prüfling glüht.

7. Verfahren nach einem der vorhergehenden Ansprüche, wobei der Prüfling im Wesentlichen rechteckig stabförmig ausgebildet ist, wobei der Prüfling an einer Fixierung aufgehängt wird, wobei die Längsachse des Prüflings senkrecht ausgerichtet wird, wobei mit der mindestens einen ersten Kamera Bilddaten einer ersten Oberflächenseite und einer zweiten Oberflächenseite aufgenommen werden, wobei die erste und die zweite Oberflächenseite parallel zur Längsachse ausgerichtet sind, wobei die erste und zweite Oberflächenseite im Wesentlichen senkrecht zueinander orientiert sind, wobei durch die Bildverarbeitung eine horizontal längs der ersten Oberflächenseite verlaufende erste Richtlinie und eine horizontal längs der zweiten Oberflächenseite verlaufende zweite Richtlinie ermittelt wird, wobei der Referenzpunkt dem Schnittpunkt der zur Stabmitte hin projizierten ersten und zweiten Richtlinien entspricht.

8. Verfahren nach Anspruch 7, ferner mit den Schritten
- Erfassung eines ersten Bereichs (408) der ersten Oberflächenseite, wobei der erste Bereich (408) die erste Oberflächenseite unterhalb der ersten Richtlinie umfasst;
- Detektion eines Fadens, falls der Bereich eine vorgegebene Mindesthöhe und eine vorgegebene Mindestbreite aufweist.

9. Computerprogrammprodukt mit computerausführbaren Instruktionen zur Durchführung des Verfahrens gemäß einem oder mehreren der vorhergehenden Ansprüche.

10. Vorrichtung zur Durchführung einer Brennprüfung an einem Prüfling (112) mit:
- mindestens einer ersten Kamera (106) zur optischen Erfassung des Prüflings (112), wobei die mindestens eine erste Kamera (106) einen Interferenzbandpassfilter zur Unterdrückung der Detektion der Brennerflamme aufweist und/oder wobei ein Rotlichtstrahler (314, 316) vorgesehen ist, mittels dessen die mindestens eine erste Kamera (306, 308) und der Prüfling bestrahlt werden um die Detektion der Brennerflamme zu unterdrücken;
- Mitteln zur Bildverarbeitung (120) der mit der mindestens einen ersten Kamera (106) aufgenommenen Bilddaten;
- Mitteln zur Ermittlung (120) eines Referenzpunktes (124) des Prüflings (112) anhand der aufgenommenen Bilddaten;
- Mitteln zur vollautomatischen Positionierung (128) eines Brenners (110) in einem vorgegebenen Abstand (126) zum Referenzpunkt, wobei der Brenner (110) zur Beflammung des Prüflings (112) vorgesehen ist.

11. Vorrichtung nach Anspruch 10, ferner mit:
- einem Brennerdepot, wobei mehrere Brenner in dem Brennerdepot einsatzbereit verwahrt werden;
- mindestens einer zweiten Kamera (108);
- Mitteln zur Bildverarbeitung der mit der mindestens einen zweiten Kamera aufgenommenen Bilddaten der Brennerflamme, wobei aus den aufgenommenen Bilddaten der Brennerflamme die Farbe der Brennerflamme ermittelbar ist, wobei die Farbe der Brennerflamme mit der Farbe einer Soll-Flamme vergleichbar ist;
- Mitteln zum Austausch des Brenners durch einen anderen Brenner im Brennerdepot, falls die Farbe der Brennerflamme nicht der Farbe der Soll-Flamme entspricht.

12. Vorrichtung nach Anspruch 10 oder 11, ferner mit:
- einem Probenmagazin (702) für die Aufnahme von einer Vielzahl von Prüflingen;
- einem Abfall-Magazin;
- Mitteln zur Umpositionierung des Prüflings aus dem Probenmagazin in eine Brandprüfungsposition, in der der Prüfling von der mindestens einen ersten Kamera optisch erfassbar ist und vom Brenner beflammbar ist;
- Mitteln zur Umpositionierung des Prüflings von der Brandprüfungsposition in das Abfall-Magazin.

13. Vorrichtung nach Anspruch 10, 11 oder 12, ferner mit:
- mindestens einer dritten Kamera (310, 312);
- Mitteln zur Bildverarbeitung der mit der mindestens einen dritten Kamera aufgenommenen Bilddaten des Prüflings;
- Mitteln zur Ermittlung anhand der mit der dritten Kamera aufgenommenen Bilddaten, ob der Prüfling brennt.

14. Vorrichtung nach Anspruch 13, ferner mit Mitteln zur Ermittlung anhand der mit der mindestens einen dritten Kamera aufgenommenen Bilddaten, ob der Prüfling glüht.

## Claims

1. A method of performing a burning test on a test piece (112) including the steps:
- image data acquisition of the test piece with at least one first camera (106);
- image processing of the image data recorded with the at least one first camera, whereby a reference point (124) on the test piece is determined;
- fully automatically positioning of a burner at a predetermined first distance (126) from the reference point to flame the test piece, wherein the at least one first camera further includes an interference band pass filter to suppress the detection of the burner flame and/or wherein the at least one first camera (306, 308) and the test piece are irradiated by a red light emitter (314, 316) to suppress the detection of the burner flame.

2. A method as claimed in Claim 1, wherein the at least one first camera further includes a polarisation filter, wherein the light from the red light emitter or the red light emitters is linearly polarised, wherein the polarisation filter of the first camera is aligned in that it has a low filter effect for the linearly polarised light.

3. A method as claimed in one of the preceding claims, with the further steps:
- image processing of the image data of the burner flame recorded with at least one second camera (108), wherein the colour of the burner flame is determined from the recorded image data, wherein the colour is compared with the colour of a reference flame;
- replacement of the burner if it is detected in the image processing that the colour of the burner flame does not correspond to the colour of the reference flame.

4. A method as claimed in one of the preceding claims, further including the step of repositioning the test piece on a sample magazine (702) into a position in which the test piece is optically visible by the at least one first camera and is flammable by the burner, wherein the sample magazine is provided for the reception of a plurality of test pieces.

5. A method as claimed in one of the preceding claims, with the further steps:
- image processing of the image data of the test piece recorded with at least one third camera (310, 312);
- determining from the image data recorded with the at least one third camera whether the test piece is burning.

6. A method as claimed in Claim 5, with the further step of determining from the image data recorded with the at least one third camera whether the test piece is glowing.

7. A method as claimed in one of the preceding claims, wherein the test piece is formed substantially in the shape of a rectangular bar, wherein the test piece is suspended on a fixing, wherein the longitudinal axis of the test piece is aligned vertically, wherein image data of a first surface side and a second surface side is recorded with the at least one first camera, wherein the first and second surface sides are aligned parallel to the longitudinal axis, wherein the first and second surface sides are orientated substantially perpendicular to one another, wherein a first guideline extending horizontally along the first surface side and a second guideline extending horizontally along the second surface side are determined by the image processing, wherein the reference point corresponds to the point of intersection of the first and second guideline projected to the centre of the bar.

8. A method as claimed in Claim 7, with the further steps
- determining a first region (408) of the first surface side, wherein the first region (408) includes the first surface side below the first axis;
- detecting a thread if the region has a predetermined minimum height and a predetermined minimum breadth.

9. A computer program product with instructions executable by a computer for carrying out the method as claimed in one of more of the preceding claims.

10. Apparatus for carrying out a burning test on a test piece (112) including:
- at least one first camera (106) for optically capturing the test piece (112), wherein the at least one first camera (106) includes an interference band pass filter for suppressing the detection of the burner flame and/or wherein a red light emitter (314, 316) is provided, by means of which the at least one first camera (306, 308) and the test piece are irradiated in order to suppress the detection of the burner flame;
- means for image processing (120) the image data recorded with the at least one first camera (106);
- means for determining (120) a reference point (124) of the test piece (112) from the recorded image data;
- means for fully automatically positioning (128) of a burner (110) at a predetermined distance (126) from the reference point, wherein the burner (110) is provided to flame the test piece (112).

11. Apparatus as claimed in Claim 10, further including:
- a burner deposit, wherein a plurality of burners are stored ready for use in the burner deposit;
- at least one second camera (108);
- means for image processing the image data of the burner flame recorded with the at least one second camera, wherein the colour of the burner flame is determinable from the recorded image data of the burner flame, wherein the colour of the burner flame is comparable with the colour of a reference flame;
- means for replacing the burner by another burner in the burner deposit if the colour of the burner flame does not correspond to the colour of the reference flame.

12. Apparatus as claimed in Claim 10 or 11, further including:
- a sample magazine (702) for receiving a plurality of test pieces;
- a waste magazine;
- means for repositioning the test piece from the sample magazine into a fire test position, in which the test piece is optically visible by the at least one first camera and is flammable by the burner;
- means for repositioning the test piece from the fire test position into the waste magazine.

13. Apparatus as claimed in Claim 10, 11 or 12, further including:
- at least one third camera (310, 312);
- means for image processing the image data of the test piece recorded with the at least one third camera;
- means for determining from the image data recorded with the third camera whether the test piece is burning.

14. Apparatus as claimed in Claim 13, further including means for determining from the image data recorded with the at least one third camera whether the test piece is glowing.

## Revendications

1. Procédé pour effectuer un contrôle de combustion sur un échantillon d'essai (112) comprenant les étapes consistant à :
- acquérir des données d'image de l'échantillon d'essai au moyen d'au moins une première caméra (106) ;
- réaliser un traitement d'image des données d'image capturées par ladite au moins une première caméra, un point de référence (124) de l'échantillon d'essai étant déterminé ;
- positionner automatiquement un brûleur à une première distance prédéterminée (126) du point de référence pour exposer l'échantillon d'essai à la flamme, ladite au moins une première caméra comportant en outre un filtre interférentiel passe-bande pour supprimer la détection de la flamme du brûleur et / ou ladite au moins une première caméra (306, 308) et l'échantillon d'essai étant irradiés par un émetteur de lumière rouge (314, 316) pour supprimer la détection de la flamme du brûleur.

2. Procédé selon la revendication 1, dans lequel ladite au moins une première caméra comprend en outre un filtre polarisant, la lumière provenant de l'émetteur ou des émetteurs de lumière rouge étant polarisée de manière linéaire, le filtre de polarisation de la première caméra étant orienté de sorte qu'il a un faible effet de filtrage de la lumière polarisée de manière linéaire.

3. Procédé selon l'une quelconque des revendications précédentes, comprenant en outre les étapes consistant à :
- réaliser un traitement d'image des données d'image de la flamme du brûleur capturées par au moins une deuxième caméra (108), la couleur de la flamme du brûleur étant déterminée à partir des données d'image capturées, la couleur étant comparée avec la couleur souhaitée d'une flamme ;
- échanger le brûleur, s'il est détecté, à l'aide du traitement de l'image, que la couleur de la flamme du brûleur ne correspond pas à la couleur souhaitée de la flamme.

4. Procédé selon l'une quelconque des revendications précédentes, comprenant en outre l'étape de repositionnement de l'échantillon d'essai sur un chargeur d'échantillons (702) dans une position dans laquelle l'échantillon d'essai est apte à être optiquement capturé par ladite au moins une première caméra et peut être exposé à la flamme du brûleur, ledit chargeur d'échantillons étant prévu pour recevoir une pluralité d'échantillons d'essai.

5. Procédé selon l'une quelconque des revendications précédentes, comprenant en outre les étapes consistant à :
- traiter des données d'image de l'échantillon d'essai capturées par au moins une troisième caméra (310, 312) ;
- déterminer, sur la base des données d'image capturées par ladite au moins une troisième caméra, si l'échantillon d'essai brûle.

6. Procédé selon la revendication 5, comprenant en outre l'étape consistant à déterminer, sur la base des données d'image capturées par ladite au moins une troisième caméra, si l'échantillon d'essai est incandescent.

7. Procédé selon l'une quelconque des revendications précédentes, dans lequel, l'échantillon d'essai étant sous la forme d'une barre sensiblement rectangulaire, l'échantillon d'essai étant suspendu à une fixation, l'axe longitudinal de l'échantillon d'essai étant aligné verticalement, des données d'image d'un premier côté de surface et d'un deuxième côté de surface sont enregistrés par ladite au moins une première caméra, le premier et le deuxième côté de surface étant alignés parallèlement à l'axe longitudinal, le premier et le deuxième côté de surface étant orientés sensiblement perpendiculairement l'un uns à l'autre, et dans lequel une première ligne directrice s'étendant le long du premier côté de surface et une deuxième ligne directrice s'étendant le long du deuxième côté de surface, sont déterminées au moyen du traitement d'image, le point de référence correspondant au centre de l'intersection de la première et de la deuxième lignes directrices projetées.

8. Procédé selon la revendication 7, comprenant en outre les étapes consistant à :
- détecter une première partie (408) du premier côté de surface, la première partie (408) comprenant le premier côté de surface situé au-dessous de la première ligne directrice ;
- détecter un fil, si la partie a une hauteur minimale prédéterminée et une largeur minimale prédéterminée.

9. Logiciel comportant des instructions exécutables par un ordinateur pour mettre en oeuvre le procédé selon une ou plusieurs des revendications précédentes.

10. Dispositif pour effectuer un contrôle de combustion sur un échantillon d'essai (112) comprenant :
- au moins une première caméra (106) pour la capture optique de l'échantillon d'essai (112), ladite au moins une première caméra (106) comportant un filtre interférentiel passe-bande pour supprimer la détection de la flamme du brûleur et / ou dans lequel un émetteur de lumière rouge (314, 316) est prévu, au moyen duquel ladite au moins une première caméra (306, 308) et l'échantillon d'essai sont irradiés pour supprimer la détection de la flamme du brûleur ;
- des moyens de traitement d'image (120) des données d'image capturées par ladite au moins une première caméra (106) ;
- des moyens (120) pour déterminer un point de référence (124) de l'échantillon d'essai (112) en se basant sur les données d'image capturées ;
- des moyens (128) de positionnement automatique d'un brûleur (110) à une première distance prédéterminée (126) du point de référence, le brûleur (110) étant disposé pour une exposition de l'échantillon d'essai (112) à la flamme.

11. Dispositif selon la revendication 10, comprenant en outre :
- une réserve de brûleurs, une pluralité de brûleurs étant maintenus prêts à l'emploi dans cette réserve de brûleurs ;
- au moins une deuxième caméra (108) ;
- des moyens pour le traitement d'image des données d'image de la flamme du brûleur capturée par ladite au moins une deuxième caméra, la couleur de la flamme du brûleur étant apte à être déterminée à partir des données d'image capturées de la flamme du brûleur, la couleur de la flamme du brûleur étant apte à être comparée avec la couleur souhaitée d'une flamme ;
- des moyens pour remplacer le brûleur par un brûleur différent dans la réserve de brûleurs si la couleur de la flamme du brûleur ne correspond pas à la couleur souhaitée de la flamme.

12. Dispositif selon la revendication 10 ou la revendication 11, comprenant en outre :
- un chargeur d'échantillons (702) pour la réception d'une pluralité d'échantillons d'essai ;
- un réservoir à déchets ;
- des moyens pour repositionner l'échantillon d'essai depuis le chargeur d'échantillons dans une position de test de combustion, l'échantillon d'essai étant apte à être optiquement capturé par ladite au moins une première caméra et étant apte à être exposé à une flamme produite par le brûleur ;
- des moyens pour repositionner l'échantillon d'essai depuis la position de test de combustion vers le réservoir à déchets.

13. Dispositif selon la revendication 10, la revendication 11 ou la revendication 12, comprenant en outre :
- au moins une troisième caméra (310, 312) ;
- des moyens de traitement d'image des données d'image de l'échantillon d'essai capturées par ladite au moins une troisième caméra ;
- des moyens pour déterminer, sur la base des données d'image capturées par ladite au moins une troisième caméra, si l'échantillon d'essai brûle.

14. Appareil selon la revendication 13, comprenant en outre des moyens pour déterminer, sur la base des données d'image capturées par ladite au moins une troisième caméra, si l'échantillon d'essai est incandescent.
